# EUROPEAN PATENT APPLICATION

(11) **EP 4 628 455 A1**
(43) Date of publication of application: **08.10.2025**
(21) Application number: 23897721.9
(22) Date of filing: 27.11.2023
(51) Int. Cl.: C02F 1/34, C02F 3/10, E02B 15/00, B63B 35/32, C02F 3/34, C02F 3/08

(54) **WATER PURIFICATION SYSTEM**

(30) Priority: 29.11.2022 JP 2022190748; 27.10.2023 JP 2023185092
(71) Applicant: KYORAKU CO., LTD., Kyoto-shi, Kyoto 602-0912 (JP)
(72) Inventor: ODOI, Junji, Fukuyama-shi, Hiroshima 720-0831 (JP); SAKAI, Seiji, Fukuyama-shi, Hiroshima 720-2122 (JP); FUJIWARA, Yutaka, Himeji-shi, Hyogo 670-0991 (JP); ONO, Yoshinori, Yamato-shi, Kanagawa 242-0018 (JP)
(74) Representative: Gulde & Partner
(86) International application number: PCT/JP2023/042341
(87) International publication number: WO 2024/117073

(57) **Abstract**

A water purification system capable of improving the water quality of a water area where blue-green algae are proliferating is provided. According to the present invention, provided is a water purification system comprising: a floating island floated on a water area; and a blue-green algae crusher connected to the floating island, wherein the blue-green algae crusher is configured to be capable of applying an external force to blue-green algae in water to be treated within the water area and crushing the blue-green algae.

## Description

### [Technical Field]

The present invention relates to a water purification system.

### [Background Art]

PTL 1 discloses a water purification apparatus to improve the natural purification ability of water quality by dissolving oxygen in a water area by rotating a propeller provided on a float to strike the water surface, thereby activating microorganisms.

### [Citation List]

### [Patent Literature]

[PTL 1] JP-A-HEI 11-128990

### [Summary of Invention]

### [Technical Problem]

The technology of PTL 1 may have insufficient water purification effects in a water area where blue-green algae are proliferating, and there is a demand for a system capable of more effectively purifying the water quality of such a water area.

The present invention has been made in view of such circumstances, and an object of the present invention is to provide a water purification system capable of improving the water quality of a water area where blue-green algae are proliferating.

### [Solution to Problem]

According to the present invention, the following inventions are provided.
[1] A water purification system comprising: a floating island floated on a water area; and a blue-green algae crusher connected to the floating island, wherein the blue-green algae crusher is configured to be capable of applying an external force to blue-green algae in water to be treated within the water area and crushing the blue-green algae.
[2] The water purification system according to [1], wherein the blue-green algae crusher is configured to operate by electric power generated by a solar panel placed on the floating island.
[3] The water purification system according to [1] or [2], further comprising foamed glass arranged to be capable of contacting water in the water area.
[4] The water purification system according to any one of [1] to [3], wherein the external force includes a shear force applied to the blue-green algae when the water to be treated passes through a constriction portion.
[5] The water purification system according to [4], wherein the external force further includes an impact force applied to the blue-green algae when the water to be treated accelerated while passing through the constriction portion collides with a collision wall, and an impact force applied to the blue-green algae by cavitation generated when the water to be treated passes through the constriction portion.
[6] The water purification system according to any one of [1] to [5], wherein the blue-green algae crusher is suspended from the floating island.
[7] The water purification system according to any one of [1] to [6], wherein the blue-green algae crusher is arranged at a peripheral edge of the floating island.
[8] The water purification system according to [3], wherein the foamed glass is submerged in the water area in a state of being housed in a net bag.

According to the present invention, since blue-green algae in water to be treated are crushed by the blue-green algae crusher, water quality can be improved even in a water area where blue-green algae are proliferating. Furthermore, by floating the floating island on the water area, the area under the floating island becomes shaded, suppressing the growth of blue-green algae. Therefore, the combination of the floating island and the blue-green algae crusher can further promote the improvement of water quality.

### [Brief Description of Drawings]

Fig. 1A is a perspective view showing a state in which a water purification system 10 according to a first embodiment of the present invention is installed in a water area R. Fig. 1B is an enlarged view of a region B in Fig. 1A.
Fig. 2 is a view of the vicinity of the region B in Fig. 1A, viewed from the south side.
Fig. 3 is a cross-sectional view of the blue-green algae crusher 6 in Fig. 2.
Fig. 4 is an enlarged view of the crushing portion 6d in Fig. 3.
Fig. 5 shows a second configuration example of the crushing portion 6d.
Fig. 6A is a perspective view showing a state in which a blue-green algae crusher 6 is attached to one float taken out from a water purification system 10 according to a second embodiment of the present invention. Fig. 6B is a cross-sectional view of Fig. 6A taken along a locking member 12. In Fig. 6A, an engagement portion 6h is omitted from illustration.
Figs. 7A to 7B show a third configuration example of the crushing portion 6d.
Figs. 8A to 8B show a state in which a first member 6i and a second member 6j, etc., constituting the blue-green algae crusher 6, are attached to one float 2 taken out from a water purification system 10 according to a third embodiment of the present invention. Fig. 8A is a plan view (partially cross-sectional view), and Fig. 8B is a front view (partially cross-sectional view).
Fig. 9A is a view of the second member 6j and its surrounding portion in Fig. 8B, viewed from a direction perpendicular to the ground contact surface of the second casing 6l. Fig. 9B is a cross-sectional view taken along line B-B in Fig. 9A.

### [Description of Embodiments]

Hereinafter, embodiments of the present invention will be described with reference to the drawings. Various features shown in the embodiments described below can be combined with each other. Furthermore, an invention can be established independently for each feature.

### 1. First Embodiment

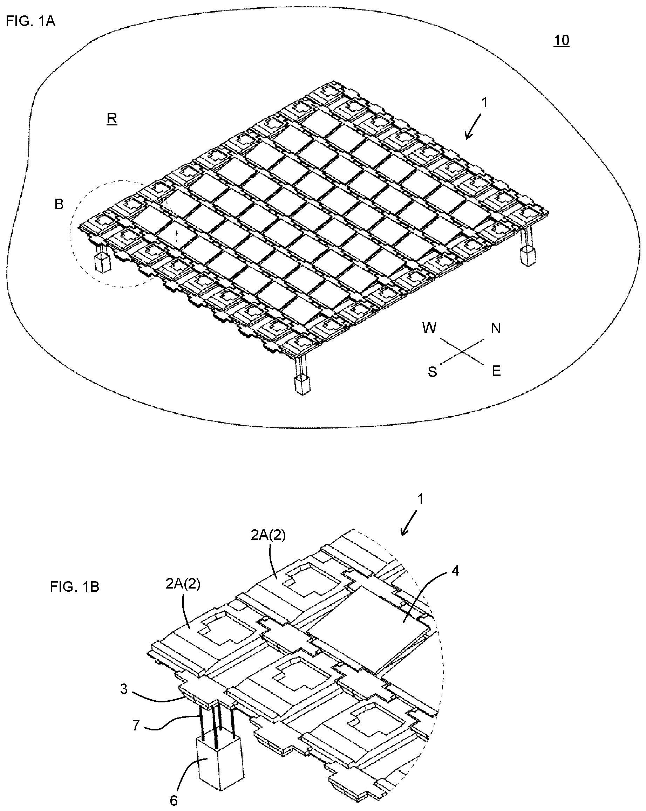

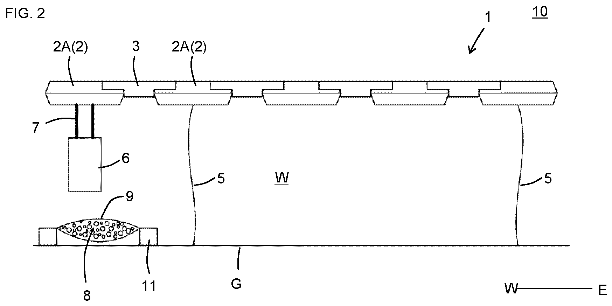

As shown in Figs. 1A to 5, a water purification system 10 according to a first embodiment of the present invention includes a floating island 1 floated on a water area R, and a blue-green algae crusher 6 connected to the floating island 1. The water purification system 10 preferably includes foamed glass 8 (shown in Fig. 2) submerged in the water area R.

### <Water Area R>

The water area R is a region containing water to be treated W for which water quality is to be purified, and examples include reservoirs such as dam reservoirs, irrigation ponds, and regulating ponds, as well as lakes and marshes. The water area R is preferably one where blue-green algae have already occurred or are expected to occur. This is because the technical significance of applying the water purification system 10 of this embodiment is remarkable in such cases. Blue-green algae are a general term for planktonic blue-green algae, and examples of planktonic blue-green algae include Microcystis, Aphanizomenon, and Anabaena. The area of the water area R is, for example, 100 to 300,000 m², and preferably 500 to 100,000 m². Specifically, this area is, for example, 100, 500, 1000, 2000, 3000, 5000, 10000, 50000, 100000, 300000 m², and may be in a range between any two of the exemplified numerical values, or any one of them or more. The average depth of the water area R is, for example, 0.5 to 100 m, and preferably 1 to 10 m. Specifically, this average depth is, for example, 0.5, 1.0, 1.5, 2.0, 2.5, 3.0, 3.5, 4.0, 4.5, 5.0, 6.0, 7.0, 8.0, 9.0, 10, 50, 100 m, and may be in a range between any two of the exemplified numerical values.

### <Floating Island 1 >

The floating island 1 is preferably configured by connecting a plurality of floats 2. In the following description, east (E), west (W), south (S), and north (N) follow the definitions shown in Fig. 1A.

The plurality of floats 2 are connected directly or via joints 3. More specifically, two floats 2 adjacent in the north-south direction are directly connected, and two floats 2 adjacent in the east-west direction are connected via joints 3.

Each float 2 is manufactured, for example, by blow molding in which a tubular parison in a molten state is inflated in a state that the tubular parison is sandwiched by a plurality of split molds, and various thermoplastic resins can be used as the molding material, but for example, polyolefin resins such as polyethylene and polypropylene can be preferably used. The float 2 has a rectangular (oblong) overall shape and a hollow structure containing gas (air, etc.) inside. The joint 3 is similarly formed by blow molding and has a hollow structure.

Loads such as a solar panel 4, cables, a power conditioner, and a junction box are mounted on the float 2 (loads other than the solar panel 4 are not shown). Many floats 2 are equipped with solar panels 4, allowing power generation by the solar panels 4. The solar panel 4 is mounted in an inclined state with its light-receiving surface facing south so as to increase power generation efficiency. The power generated by the solar panel 4 is transmitted through cables. Direct current power from a plurality of solar panels 4 is collected in the junction box through cables, and the direct current power from the junction box is converted into alternating current power by the power conditioner. The junction box and the power conditioner may be installed on the ground instead of on the float 2.

Floats 2 arranged at the periphery of the floating island 1 are usually not loaded with loads such as solar panels 4 and are used as passages. Hereinafter, such floats 2 are referred to as "outer floats," and the remaining floats 2 are referred to as "inner floats."

The outer floats 2A are arranged so as to surround the inner floats. As shown in Fig. 2, one end of a mooring member 5 such as an anchor rope is fixed to a part or all of the outer float 2A. The other end of the mooring member 5 is connected to an anchor submerged in the bottom G of the pond or lake, or fixed to the land around the pond or lake. This suppresses the floats 2 from floating up and the floating island 1 from being washed away.

The ratio of the area of the floating island 1 to the area of the water area R is, for example, 1 to 100%, and specifically, for example, 1, 3, 5, 10, 20, 30, 40, 50, 60, 70, 80, 90, 100%, and may be in a range between any two of the exemplified numerical values.

The floating island 1 may be fixed or may be configured to be movable. By moving the floating island 1 to stir the water in the water area R, water purification efficiency can be increased. For example, the floating island 1 can be composed of a stationary floating island and a movable floating island arranged around it, and the movable floating island can be rotated around the stationary floating island.

### <Blue-green Algae Crusher 6>

The blue-green algae crusher 6 is connected to the floating island 1 and is configured to be capable of applying an external force to blue-green algae in water to be treated W within the water area R and crushing the blue-green algae. The effect of connecting the blue-green algae crusher 6 to the floating island 1 is that, unlike the case where the blue-green algae crusher 6 is installed on land or on the water bottom, the positional relationship between the blue-green algae crusher 6 and the water surface can be kept constant. Since the concentration of blue-green algae tends to be high at a position 80 to 100 cm from the water surface, keeping the positional relationship between the blue-green algae crusher 6 and the water surface constant makes it easier to improve the crushing efficiency of blue-green algae.

The mode of connection is not particularly limited, and the blue-green algae crusher 6 may be connected to the floating island 1 by an engagement structure that prevents relative movement of the blue-green algae crusher 6 with respect to the floating island 1, or may be connected to the floating island 1 by suspending it from the floating island 1 using a rope 7, for example. The blue-green algae crusher 6 is preferably arranged at the peripheral edge of the floating island 1. Directly under the floating island 1, sunlight is blocked by the floating island 1, so blue-green algae are less likely to occur. Therefore, the concentration of blue-green algae tends to be higher in the water area R around the floating island 1 than directly under the floating island 1, and by arranging the blue-green algae crusher 6 at the peripheral edge of the floating island 1, efficient crushing of blue-green algae becomes possible. In this case, the blue-green algae crusher 6 is preferably connected to the outer float 2A.

It is assumed that the median diameter of blue-green algae before crushing is M1, and that the median diameter of blue-green algae after crushing is M2. M1 is, for example, 30 µm or more, and preferably 50 µm or more. M1 is, for example, 30 µm or more, and preferably 50 µm or more. M1 is, for example, 30 µm to 500 µm, and specifically, for example, 30, 40, 50, 60, 70, 80, 90, 100, 150, 200, 250, 300, 350, 400, 450, 500 µm, and may be in a range between any two of the exemplified numerical values, or any one of them or more. M2 is, for example, 25 µm or less, and preferably 20 µm or less. M2 is, for example, 1 to 25 µm, and specifically, for example, 1, 5, 10, 15, 20, 25 µm, and may be in a range between any two of the exemplified numerical values, or any one of them or less. M2/M1 is, for example, 0.5 or less, and preferably 0.3 or less. This value is, for example, 0.001 to 0.5, and specifically, for example, 0.001, 0.01, 0.05, 0.10, 0.15, 0.20, 0.25, 0.30, 0.35, 0.40, 0.45, 0.50, and may be in a range between any two of the exemplified numerical values, or any one of them or less. The median diameter of blue-green algae can be measured using a laser diffraction/scattering particle size distribution measuring device (for example, manufactured by Horiba, Ltd., model LA-960).

By crushing the blue-green algae, the cell wall (peptidoglycan wall) of the blue-green algae is preferably destroyed. This makes it easier for the blue-green algae to be preyed upon by microorganisms (preferably aerobic microorganisms), thereby promoting water purification.

The blue-green algae crusher 6 is preferably configured to operate by electric power generated by the solar panel 4 placed on the floating island 1. In this case, external power supply becomes unnecessary, which can contribute to the reduction of CO₂ emissions.

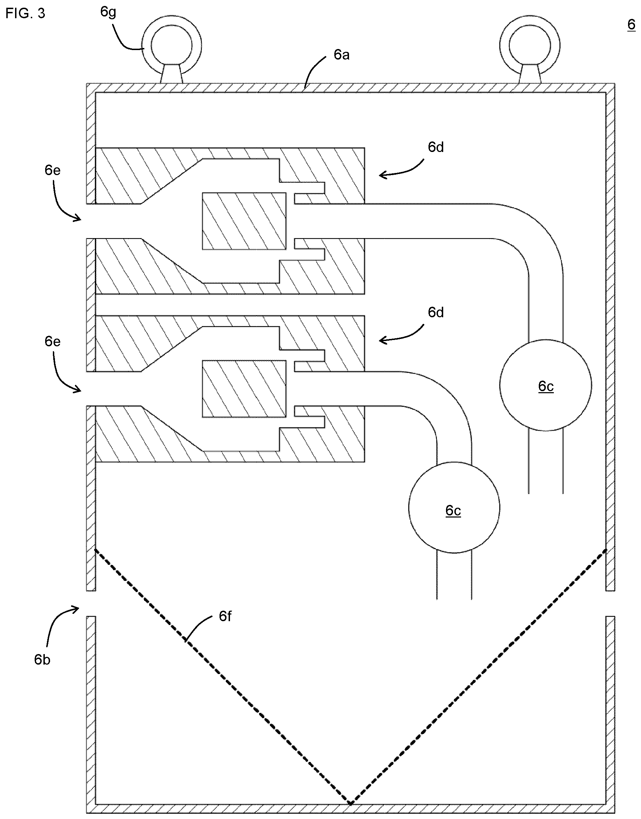

As shown in Fig. 3, the blue-green algae crusher 6 preferably includes a casing 6a, a water intake port 6b, a pump 6c, a crushing portion 6d, and a discharge port 6e. The water intake port 6b and the discharge port 6e are provided in the casing 6a, and the pump 6c and the crushing portion 6d are arranged inside the casing 6a. A filter 6f may be arranged between the water intake port 6b and the crushing portion 6d. The pump 6c sucks water to be treated W contained in the water area R, supplies it to the crushing portion 6d through the filter 6f, and the crushing portion 6d applies an external force to the blue-green algae to crush them, and the obtained treated water is discharged through the discharge port 6e. The casing 6a is provided with a ring-shaped connection portion 6g for connecting the rope 7. The filter 6f is provided to prevent foreign matter that cannot pass through the constriction portion 6d2 from entering the constriction portion 6d2. A filter may also be provided at the water intake port 6b to reduce the amount of foreign matter entering the casing 6a. The number of crushing portions 6d provided in the blue-green algae crusher 6 may be one or more. By providing a plurality of crushing portions 6d in the blue-green algae crusher 6 as in this embodiment, the crushing efficiency of blue-green algae can be increased. The pump 6c and the discharge port 6e may be provided corresponding to each crushing portion 6d, or a plurality of crushing portions 6d may share the pump 6c and/or the discharge port 6e.

The water intake port 6b preferably has a depth from the water surface of 0 to 2.0 m, more preferably 0.4 to 1.4 m, and even more preferably 0.6 to 1.2 m. Specifically, this depth is, for example, 0, 0.1, 0.2, 0.3, 0.4, 0.5, 0.6, 0.7, 0.8, 0.9, 1, 1.1, 1.2, 1.3, 1.4, 1.5, 2.0 m, and may be in a range between any two of the exemplified numerical values. Since the concentration of blue-green algae tends to be high near the water surface, arranging the water intake port 6b at a position close to the water surface makes it possible to efficiently crush blue-green algae. In Fig. 3, the water intake port 6b is arranged below the discharge port 6e, but the water intake port 6b may be arranged above the discharge port 6e.

The treated water discharged from the discharge port 6e can be used for cooling the solar panel 4. Since the solar panel 4 generally has higher power generation efficiency at lower temperatures, cooling the solar panel 4 can increase the power generation efficiency. In one example, a hose with one end connected to the discharge port 6e is arranged below the solar panel 4, and the solar panel 4 can be cooled by spraying the treated water toward the back surface of the solar panel 4 from holes provided in the side surface of the hose. Furthermore, a plurality of solar panels 4 can be cooled with one hose by spraying the treated water below each of the plurality of solar panels 4.

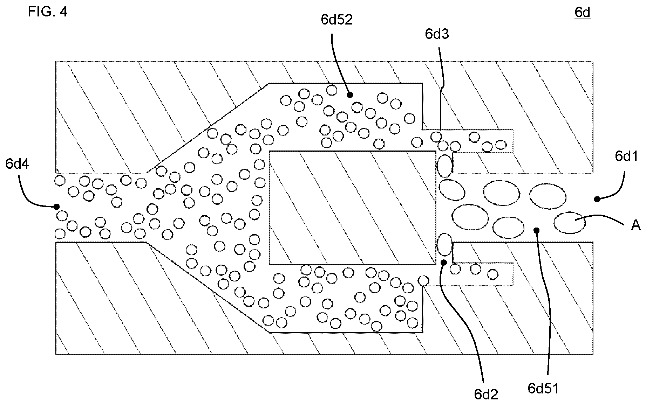

In a first configuration example, as shown in Fig. 4, the crushing portion 6d includes an inflow portion 6d1, a constriction portion 6d2, a collision wall 6d3, an outflow portion 6d4, and first and second volume portions 6d51 and 6d52. By the action of the pump 6c, the water to be treated W flows in from the inflow portion 6d1, passes through the first volume portion 6d51, the constriction portion 6d2, and the second volume portion 6d52 in this order, and flows out from the outflow portion 6d4. The flow area S1 of the constriction portion 6d2 is smaller than each of the flow area S2 of the volume portion on the upstream side of the constriction portion 6d2 (first volume portion 6d51) and the flow area S3 of the volume portion on the downstream side of the constriction portion 6d2 (second volume portion 6d52). The value of S1/S2 and/or S1/S3 is preferably 0.5 or less, and more preferably 0.2 or less. This value is, for example, 0.001 to 0.5, and specifically, for example, 0.001, 0.01, 0.1, 0.2, 0.3, 0.4, 0.5, and may be in a range between any two of the exemplified numerical values, or any one of them or less. The constriction portion 6d2 is preferably annular. The width W1 of the constriction portion 6d2 is, for example, 10 mm or less, preferably 5 mm or less, and more preferably 3 mm or less. W1 is, for example, 0.0001 to 10 mm, and specifically, for example, 0.0001, 0.001, 0.01, 0.1, 0.5, 1.0, 1.5, 2.0, 2.5, 3.0, 3.5, 4.0, 4.5, 5.0, 10 mm, and may be in a range between any two of the exemplified numerical values, or any one of them or less. When the median diameter of blue-green algae before crushing is M1, the value of W1/M1 is, for example, 100 or less, and preferably 50 or less. This value is, for example, 0.1 to 100, and specifically, for example, 0.1, 1, 5, 10, 15, 20, 25, 30, 35, 40, 45, 50, 55, 60, 65, 70, 75, 80, 85, 90, 95, 100, and may be in a range between any two of the exemplified numerical values, or any one of them or less.

When the water to be treated W passes through the constriction portion 6d2, the water to be treated W is accelerated. At this time, shear force is applied to the blue-green algae A contained in the water to be treated W, and the blue-green algae A are crushed. Furthermore, the collision wall 6d3 is arranged in the traveling direction of the water to be treated W that has passed through the constriction portion 6d2, and the water to be treated W accelerated while passing through the constriction portion 6d2 tends to collide vigorously with the collision wall 6d3. Then, when the water to be treated W collides with the collision wall 6d3, impact force is applied to the blue-green algae A contained in the water to be treated W, and the blue-green algae A are further crushed. Furthermore, the blue-green algae A are further crushed by the impact force applied by cavitation generated when the water to be treated W passes through the constriction portion. Cavitation is a physical phenomenon in which the generation and disappearance of bubbles occur in a short time due to a pressure difference in the flow of liquid, and fine bubbles (microbubbles and/or nanobubbles) with a diameter of 100 µm or less are generated due to the boiling of water and/or the release of dissolved gas due to a decrease in pressure, and impact force is applied to the blue-green algae A by the shock waves generated when these bubbles burst.

Air is preferably supplied to the crushing portion 6d. In this case, the generation of bubbles by cavitation is promoted. The air can be supplied by connecting one end of an air tube to the crushing portion 6d and opening the other end to the atmosphere. In this case, air is drawn into the crushing portion 6d by the flow of water to be treated through the crushing portion 6d. The one end of the air tube may be connected to any of the constriction portion 6d2, its upstream side, or its downstream side, but is preferably connected to the upstream side of the constriction portion 6d2. This is because the crushing of blue-green algae is promoted by the air passing through the constriction portion 6d2. The air supply may be performed actively using a pump or the like. The number of bubbles generated by cavitation is, for example, 10 million/mL or more, for example, 10 million to 1 billion/mL, and preferably 100 million to 500 million/mL. The average particle size of the bubbles is, for example, 1 to 500 nm, preferably 10 to 100 nm, and more preferably 20 to 60 nm.

In this embodiment, the above three types of external forces are applied to the blue-green algae A, and the blue-green algae A are effectively crushed. Instead of applying the three types of external forces to the blue-green algae A, the blue-green algae A may be configured to be subjected to one or two of these external forces.

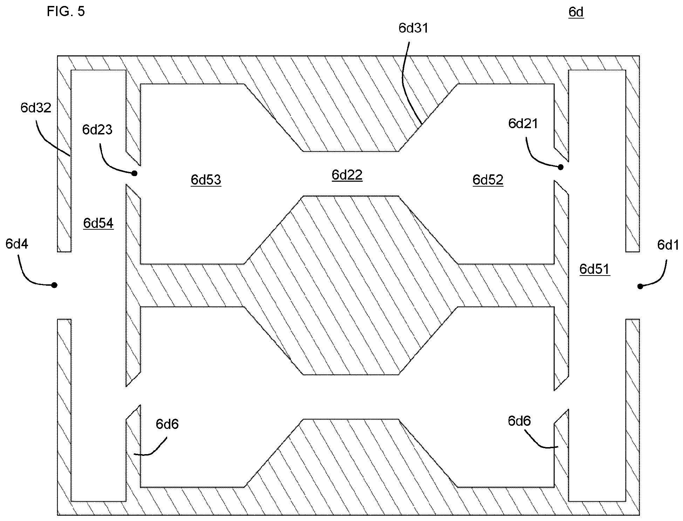

In a second configuration example, as shown in Fig. 5, the crushing portion 6d includes an inflow portion 6d1, first to third constriction portions 6d21 to 6d23, first and second collision walls 6d31 and 6d32, an outflow portion 6d4, and first to fourth volume portions 6d51 to 6d54. By the action of the pump 6c, the water to be treated W flows in from the inflow portion 6d1, passes through the first volume portion 6d51, the first constriction portion 6d21, the second volume portion 6d52, the second constriction portion 6d22, the third volume portion 6d53, the third constriction portion 6d23, and the fourth volume portion 6d54 in this order, and flows out from the outflow portion 6d4. The flow area of each of the first to third constriction portions 6d21 to 6d23 is smaller than each of the flow area of the volume portion on the upstream side and the flow area of the volume portion on the downstream side of each of the first to third constriction portions 6d21 to 6d23, respectively. The first and third constriction portions 6d21 and 6d23 are composed of circular holes provided in a plate-shaped partition wall 6d6. The first and third constriction portions 6d21 and 6d23 are provided so as to be inclined with respect to the flow direction from the inflow portion 6d1 to the outflow portion 6d4. The inclination angle of the first and third constriction portions 6d21 and 6d23 is preferably 20 to 50 degrees, and more preferably 30 to 40 degrees. The second constriction portion 6d22 is Venturi-shaped. The water to be treated W is accelerated when passing through each of the first to third constriction portions 6d21 to 6d23. The water to be treated W that has passed through the first constriction portion 6d21 collides with the first collision wall 6d31, and the water to be treated W that has passed through the second constriction portion 6d22 collides with the second collision wall 6d32. Regarding other points, the contents described for the first configuration example also apply to this configuration example, unless it contradicts the purpose.

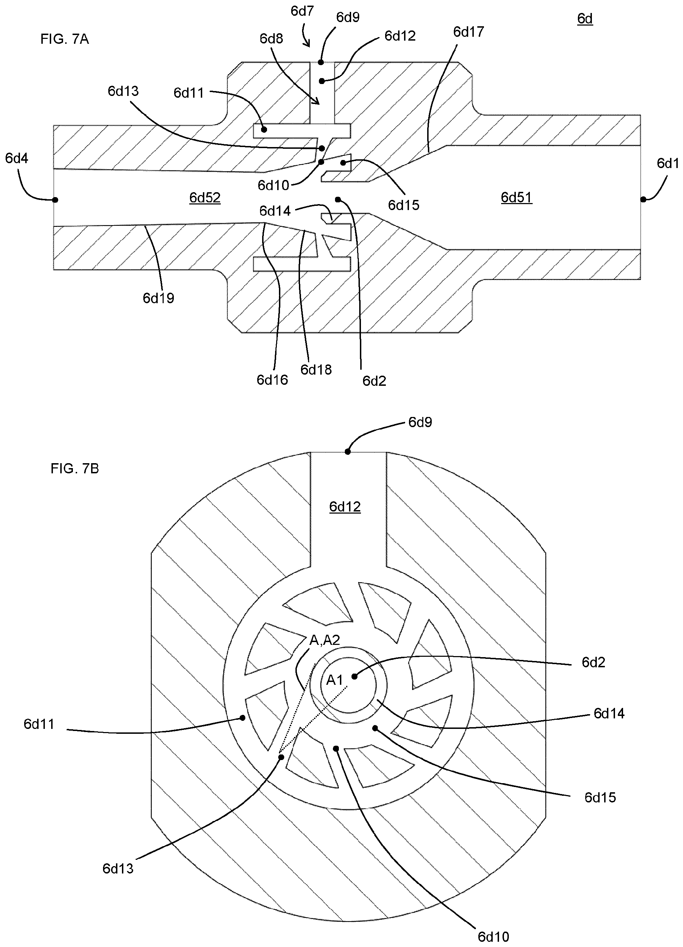

In a third configuration example, as shown in Figs. 7A to 7B, the crushing portion 6d includes an inflow portion 6d1, a constriction portion 6d2, an air supply portion 6d7, an outflow portion 6d4, and first and second volume portions 6d51 and 6d52. By the action of the pump 6c, the water to be treated W flows in from the inflow portion 6d1, passes through the first volume portion 6d51, the constriction portion 6d2, and the second volume portion 6d52 in this order, and flows out from the outflow portion 6d4. The flow area S1 of the constriction portion 6d2 is smaller than the flow area S2 of the volume portion on the upstream side of the constriction portion 6d2 (first volume portion 6d51) and the flow area S3 of the volume portion on the downstream side of the constriction portion 6d2 (second volume portion 6d52).

When the water to be treated W passes through the constriction portion 6d2, the water to be treated W is accelerated. At this time, shear force is applied to the blue-green algae contained in the water to be treated, and the blue-green algae are crushed. Furthermore, the air supply portion 6d7 includes an air passage 6d8 configured to supply air to the water to be treated W. The air passage 6d8 is arranged such that one end 6d9 is open to the atmosphere and the other end 6d10 faces the flow path of the water to be treated W. When the water to be treated W moves in the flow path of the crushing portion 6d, air is entrained in the water to be treated W and supplied to the water to be treated W. The supply of air promotes the crushing and decomposition of blue-green algae. The other end 6d10 is preferably arranged so as to face the second volume portion 6d52 (preferably a position adjacent to the constriction portion 6d2 in the second volume portion 6d52).

The constriction portion 6d2 is the narrowest immediately before the air supply portion 6d7. The second volume portion 6d52 is expanded in diameter at the boundary with the constriction portion 6d2 compared to the constriction portion 6d2, and the diameter is gradually reduced as it moves away from the constriction portion 6d2. The second volume portion 6d52 has the smallest diameter at the necked portion 6d16, and the diameter gradually increases from the necked portion 6d16 toward the outflow portion 6d4. It is assumed that the portion where the first volume portion 6d51 narrows toward the constriction portion 6d2 is a first inclined portion 6d17, that the portion where the second volume portion 6d52 narrows toward the necked portion 6d16 is a second inclined portion 6d18, and that the portion where the diameter increases from the necked portion 6d16 toward the outflow portion 6d4 is a third inclined portion 6d19. The absolute value of the inclination angle is first inclined portion 6d17 > second inclined portion 6d18 > third inclined portion 6d19.

Preferably, the air passage 6d8 has a plurality of the other ends 6d10, and the plurality of the other ends 6d10 are arranged spaced apart in the circumferential direction. The number of the other ends 6d10 is, for example, 2 to 12, and preferably 4 to 8 (6 in this embodiment). The plurality of the other ends 6d10 are preferably arranged evenly spaced apart in the circumferential direction.

The air passage 6d8 includes an annular passage 6d11 configured in an annular shape, a first passage 6d12 connecting the annular passage 6d11 and the one end 6d9, and a second passage 6d13 connecting the annular passage 6d11 and the other end 6d10. Since the second passage 6d13 is provided corresponding to each of the other ends 6d10, the number of second passages 6d13 is equal to the number of the other ends 6d10. The second passage 6d13 tapers toward the other end 6d10. The constriction portion 6d2 is arranged in a cylindrical portion 6d14, and an annular mixing space 6d15 is provided outside the cylindrical portion 6d14. As shown in Fig. 7B, the direction A in which the second passage 6d13 faces is preferably deviated from the direction A1 toward the center of the constriction portion 6d2, and more preferably coincides with the tangential direction A2 of the outer peripheral surface of the cylindrical portion 6d14. According to such a configuration, the water to be treated W and air can be efficiently stirred.

### <Foamed Glass 8>

The foamed glass 8 is a foamed material of glass, and can be manufactured by crushing glass, adding a foaming agent, and melting and foaming it in a firing furnace. The raw material glass is preferably waste glass from the viewpoint of environmental protection. Since the foamed glass 8 is a porous material and has a large surface area, it easily becomes a habitat for microorganisms. Therefore, by submerging and placing the foamed glass 8 in the water area R, the number of microorganisms can be increased, and the predation of the crushed blue-green algae A by microorganisms can be promoted. The foamed glass 8 is preferably in the form of particles. The foamed glass 8 preferably has an average particle size of 3 to 8 mm, more preferably 4 to 7 mm, and even more preferably 5 to 6 mm. The average particle size means the average value of the equivalent spherical diameter of 100 particles randomly selected from particles with an equivalent spherical diameter of 1 mm or more.

It is also preferable to supply air to the foamed glass 8. In this case, the number of aerobic microorganisms that use the foamed glass 8 as a habitat can be increased. The specific gravity of the foamed glass 8 is, for example, 0.3 to 1.6, preferably 0.3 to 0.6, and specifically, for example, 0.3, 0.4, 0.5, 0.6, 0.7, 0.8, 0.9, 1.0, 1.1, 1.2, 1.3, 1.4, 1.5, 1.6, and may be in a range between any two of the exemplified numerical values. The expansion ratio of the foamed glass 8 is, for example, 1.5 to 10 times, and specifically, for example, 1.5, 2.0, 2.5, 3.0, 3.5, 4.0, 4.5, 5.0, 5.5, 6.0, 6.5, 7.0, 7.5, 8.0, 8.5, 9.0, 9.5, 10.0 times, and may be in a range between any two of the exemplified numerical values.

It is preferable that the foamed glass 8 has open cells. In this case, even if the specific gravity of the foamed glass 8 is less than 1, the foamed glass 8 can be submerged in water by water permeating into the open cells. The usage amount of the foamed glass 8 with respect to 1 m³ of water in the water area R is preferably 0.0001 to 0.2 m³, more preferably 0.0005 to 0.1 m³, and even more preferably 0.001 to 0.02 m³. The usage amount of the foamed glass 8 with respect to 1 m³ of water in the water area R is, for example, 0.0001, 0.0005, 0.001, 0.005, 0.01, 0.02, 0.05, 0.1, or 0.2 m³, and may be in a range between any two of the numerical values exemplified here.

The foamed glass 8 only needs to be arranged so as to be able to contact water in the water area R, and may be submerged in the water area R, or the water of the water area R may be pumped up and brought into contact with the foamed glass 8 without submerging the foamed glass 8 in the water area R. When submerging the foamed glass 8 in the water area R, it may be scattered directly in the water area R, but it is preferable to submerge the foamed glass 8 in the water area R in a state of being housed in a net bag 9. The latter case has the advantage that recovery and replacement of the foamed glass 8 become easy. Furthermore, the net bag 9 containing the foamed glass 8 is preferably fixed to an anchor 11 provided at the bottom of the water area R. In this case, it is suppressed that the net bag containing the foamed glass 8 is washed away to another location. It is preferable to connect a buoy to the anchor 11. By floating the buoy on the water surface, the position where the foamed glass 8 is submerged becomes easy to identify.

In one example, the foamed glass 8 can be housed in a container. In this case, water in the water area R can be brought into contact with the foamed glass 8 by pumping up the water in the water area R and supplying it into the container. The water in the container may be discharged using a pump, or may be discharged through an opening provided in the bottom wall or the side wall of the container. In one example, the treated water discharged from the blue-green algae crusher 6 may be directly supplied into the container. In this case, the decomposition of the blue-green algae crushed by the blue-green algae crusher 6 is easily promoted. The container containing the foamed glass 8 may be installed on land, installed on the floating island 1, or floated on the water area R.

### 2. Second Embodiment

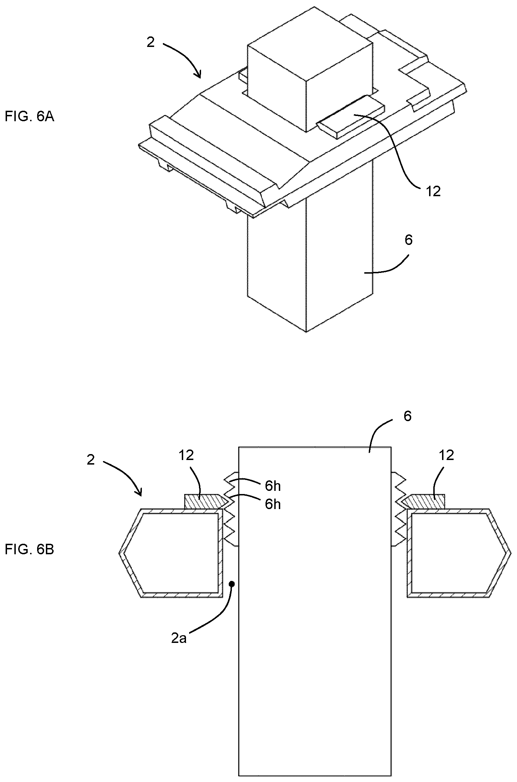

A water purification system 10 according to a second embodiment of the present invention will be described using Figs. 6A to 6B. This embodiment is similar to the first embodiment, and the contents described in the first embodiment are applicable to this embodiment as well, unless it contradicts the purpose.

In this embodiment, the blue-green algae crusher 6 is arranged in an opening 2a provided in the float 2. The blue-green algae crusher 6 is preferably fixed to the float 2 so as to be movable in the vertical direction. In this case, by moving the blue-green algae crusher 6 in the vertical direction, the position of the water intake port 6b shown in Fig. 3 is adjusted to improve the purification efficiency, or the installation and maintenance workability of the blue-green algae crusher 6 can be improved. Furthermore, the blue-green algae crusher 6 may be suspended from the float 2 so as to be submerged below the opening 2a. In this case, compared to the case where the blue-green algae crusher 6 is suspended from the outside of the float 2, the tilting of the float 2 due to the gravity of the blue-green algae crusher 6 is suppressed. Furthermore, compared to the case where the blue-green algae crusher 6 is suspended from the lower surface of the float 2 without an opening, it becomes easier to pull up the blue-green algae crusher 6.

In one example, as shown in Fig. 6B, a locking member 12 is provided on the float 2. The locking member 12 is configured to be switchable between a state of being engaged with an engagement portion 6h provided on the blue-green algae crusher 6 and a state where the engagement is released. For example, the above switching can be made possible by sliding the locking member 12. Thereby, by releasing the engagement by the locking member 12, the blue-green algae crusher 6 can be made movable in the vertical direction. Furthermore, the engagement portion 6h can be provided at a plurality of height positions vertically separated on the blue-green algae crusher 6. In this case, by changing the engagement portion 6h to be engaged with the locking member 12, the position at which the blue-green algae crusher 6 is fixed can be vertically shifted. The combination of the locking member 12 and the engagement portion 6h may be, for example, a pin and a hole into which this pin can be inserted.

It is preferable to attach the mooring member 5 shown in Fig. 2 to the float 2 with the blue-green algae crusher 6 attached to the opening 2a. When the mooring member 5 is attached to the float 2 having the opening 2a, it is easily deformed when a large horizontal load is applied to the float 2 by the mooring member 5, but by attaching the blue-green algae crusher 6 to the opening 2a, the deformation of the float 2 can be suppressed. This can increase the mooring strength of the floating island 1.

### 3. Third Embodiment

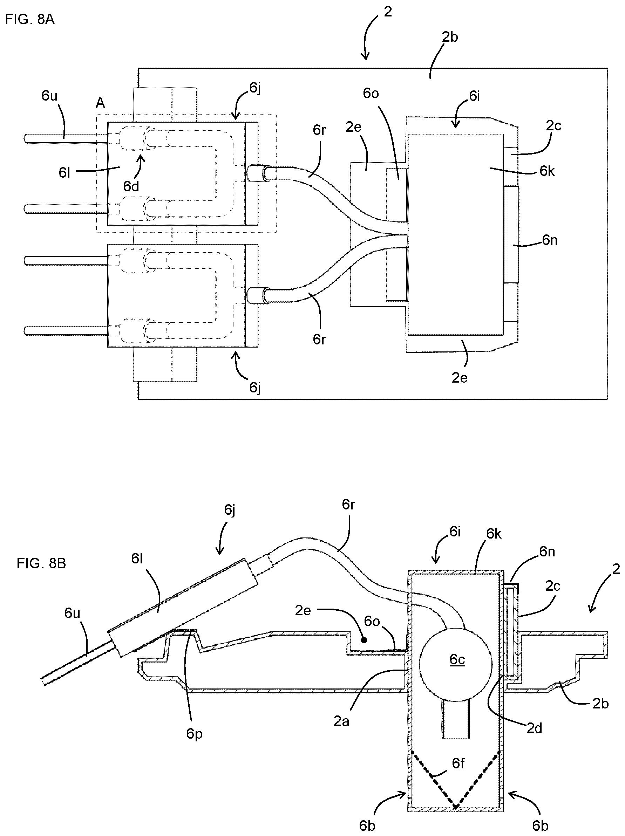

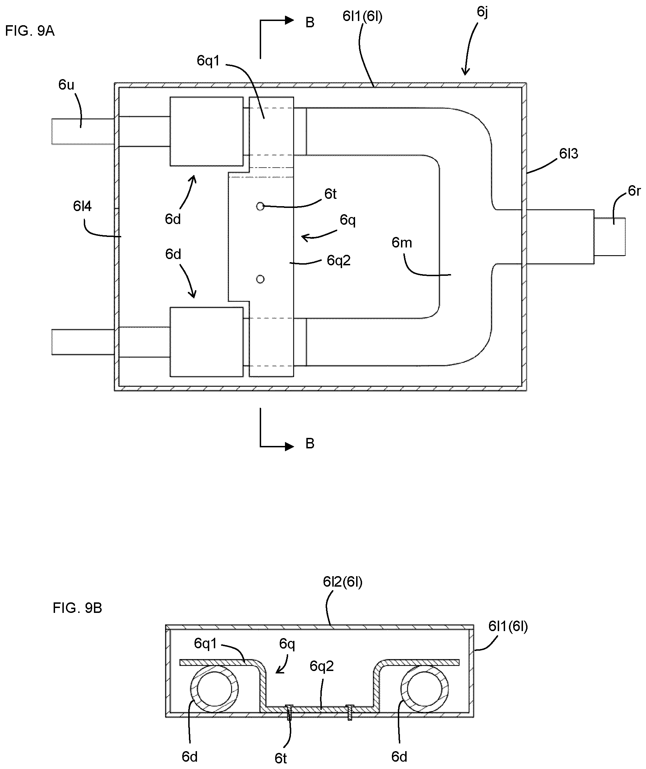

A water purification system 10 according to a third embodiment of the present invention will be described using Figs. 8A to 9B. This embodiment is similar to the first and second embodiments, and the contents described in the first and second embodiments are applicable to this embodiment as well, unless it contradicts the purpose. Hereinafter, differences will be mainly described.

In this embodiment, the blue-green algae crusher 6 is configured separately as a first member 6i and a second member 6j. The first member 6i includes a first casing 6k and a pump 6c. The pump 6c is arranged inside the first casing 6k. The second member 6j includes a second casing 6l and a crushing portion 6d. The crushing portion 6d is arranged inside the second casing 6l. The second casing 6l includes a casing body 6l1 and a lid 6l2 that covers the opening of the casing body 6l1. The first member 6i and the second member 6j are connected by piping 6r. The blue-green algae crusher 6 of the first and second embodiments may be too heavy to be easily transported, but in this embodiment, the pump 6c and the crushing portion 6d, which are particularly heavy among the blue-green algae crusher 6, are arranged in separate members, and each of the first member 6i and the second member 6j becomes lighter than the blue-green algae crusher 6 of the first and second embodiments. According to this embodiment, by transporting the first member 6i and the second member 6j separately, installing them on the float 2, and then connecting the first member 6i and the second member 6j with the piping 6r, the blue-green algae crusher 6 can be installed on the float 2 without transporting the heavy integrated blue-green algae crusher 6. The crushing portion 6d may be any of the first to third configuration examples described above, but the third configuration example is preferable.

The blue-green algae crusher 6 includes a plurality of second members 6j, and these second members 6j are each connected to the first member 6i via the piping 6r. According to such a configuration, the water to be treated W sucked by one first member 6i can be treated by a plurality of second members 6j, so the crushing efficiency of blue-green algae is increased. A plurality of pumps 6c may be provided in the first member 6i, or a single pump 6c may be provided. In the former case, each pump 6c can be connected to each second member 6j. In the latter case, the water to be treated W sucked by a single pump 6c can be branched and supplied to a plurality of second members 6j. In the former case, the crushing efficiency of blue-green algae can be increased, and in the latter case, equipment costs can be reduced.

Since the piping 6r has one end connected to the pump 6c in the first member 6i and the other end connected to the crushing portion 6d in the second member 6j, it is possible to send the water to be treated W sucked by the pump 6c to the crushing portion 6d. A plurality of (two in this embodiment) crushing portions 6d are provided in the second member 6j, and these crushing portions 6d and the piping 6r are connected via a branch pipe 6m. The base of the branch pipe 6m is preferably inserted into an opening of the side wall 6l3 of the second casing 6l. This is because the base of the branch pipe 6m is supported by the side wall 6l3. According to such a configuration, the water to be treated W flowing in one piping 6r can be treated by a plurality of crushing portions 6d, so the crushing efficiency of blue-green algae is increased. The crushing portion 6d can be fixed to the second casing 6l using a fixing plate 6q. The fixing plate 6q preferably includes a portion 6q1 arranged above the crushing portion 6d and a portion 6q2 fixed to the second casing 6l. The fixing plate 6q can be fixed to the second casing 6l using, for example, screws 6t.

The first member 6i is preferably installed in the opening 2a of the float 2. In this embodiment, brackets 6n and 6o are fixed to the first casing 6k of the first member 6i, the first casing 6k is inserted into the opening 2a, and the brackets 6n and 6o are brought into contact with the float 2 to prevent the first casing 6k from falling, so the first member 6i can be installed. According to such a configuration, the first member 6i can be easily attached to and detached from the float 2. The float 2 includes a float body 2b and an erected portion 2c. The erected portion 2c is connected to the float body 2b via a hinge portion 2d provided at a position adjacent to the opening 2a of the float body 2b. The float 2 can be manufactured by forming a molded body in which the float body 2b and the upright part 2c are integrally molded in a hollow shape with the erected portion 2c laid down, cutting three sides around the upright part 2c, and raising the erected portion 2c using the remaining one side as a hinge portion 2d. In the molded body, the portion where the laid-down erected portion 2c was provided becomes an opening 2a after the erected portion 2c is raised. The opening 2a and the erected portion 2c are placed within a recessed portion 2e provided in the float body 2b. A bracket 6n is placed on top of the erected portion 2c. A bracket 6o is positioned on the opposite side of the bracket 6n, with a first member 6i in between. The bracket 6o rests on the bottom surface of the recessed portion 2e.

The second member 6j is preferably installed on the float 2. Nuts (not shown) used for connecting the floats 2 to each other are embedded on the float 2, and the second member 6j can be installed on the float 2 by fixing a metal fitting 6p to these nuts and fixing the metal fitting 6p to the second casing 6l.

The portion on the outflow portion 6d4 side of the crushing portion 6d is preferably inserted into an opening provided in the side wall 6l4 of the second casing 6l. The side wall 6l4 is preferably opposed to the side wall 6l3. If the outflow portion 6d4 is located higher than the water surface, the treated water obtained by crushing blue-green algae collides with the water surface and generates sound, so in order to reduce the generation of such sound, it is preferable to connect piping 6u to the outflow portion 6d4 so that the tip of the piping 6u is located lower than the water surface. Furthermore, the piping 6u is preferably inclined so as to be away from the float 2 (particularly the water intake port 6b). In this case, since the treated water is discharged away from the float 2, the proportion of untreated blue-green algae contained in the water to be treated W sucked from the water intake port 6b is increased. Furthermore, by discharging the treated water away from the float 2, the water contained in the water area R where the float 2 floats is stirred, and from this viewpoint, the proportion of untreated blue-green algae contained in the water to be treated W sucked from the water intake port 6b is increased. Furthermore, the first casing 6k is provided with the water intake port 6b on the side opposite to the side where the piping 6u is provided (the right side in Fig. 8B). Since this water intake port 6b is arranged at a position away from the tip of the piping 6u, by sucking the water to be treated W from this water intake port 6b, the proportion of untreated blue-green algae contained in the water to be treated W is increased.

### 4. Other Embodiments

- When the concentration of blue-green algae is extremely high or when it is desired to maintain high purification efficiency, a device for supplying air in the form of nanobubbles or the like may be provided in conjunction. This can further increase the water purification efficiency.
- In the first to third embodiments, the casing of the blue-green algae crusher 6 can be omitted if the casing is unnecessary. For example, in the first embodiment, the casing 6a may be omitted, and the pump 6c may be suspended by the rope 7. In this case, the filter 6f may be attached to the water intake of the pump 6c, for example.

### [EXAMPLE]

Using the water purification system 10 shown in Figs. 1A to 4, water purification was performed in a reservoir with an area of 1319.585 m² and a depth of 6.8 m at full water level. The floating island 1 was arranged at the center of the reservoir so as to cover 5.4% of the area of the reservoir, and the blue-green algae crusher 6 was arranged near the north end of the floating island 1. Six solar panels 4 were installed on the floating island 1. The blue-green algae crusher 6 was installed such that the position of the water intake port 6b was 80 cm from the water surface. The glass foamed material (foamed glass 8) was scattered in the region excluding the area directly under the floating island 1. As the glass foamed material, a material with a specific gravity of 0.3 to 0.6 and having open cells was used. The scattering amount of the glass foamed material was 12 m³ (3.6 t). The width of the constriction portion 6d2 of the blue-green algae crusher 6 was set to 3 mm. The processing capacity of each blue-green algae crusher 6 was 50 L/min. The blue-green algae crusher 6 was operated by the electric power generated by the solar panels 4.

The water purification system 10 was operated for 6 months, and the median diameter of blue-green algae, oxidation-reduction potential, and transparency were measured before and after the operation. The median diameter of the blue-green algae changed from 81 µm before operation to 11 µm after operation. The oxidation-reduction potential changed from 202 mV before operation to 126 mV after operation. The transparency changed from 80 cm before operation to 4.5 m after operation.

From these results, it can be seen that the water quality of the reservoir was significantly improved by the water purification system 10.

### [Reference Signs List]

1: floating island, 2: float, 2A: outer float, 2a: opening, 2b: float body, 2c: erected portion, 2d: hinge portion, 2e: recessed portion, 3: joint, 4: solar panel, 5: mooring member, 6: blue-green algae crusher, 6a: casing, 6b: water intake port, 6c: pump, 6d: crushing portion, 6d1: inflow portion, 6d2: constriction portion, 6d21: first constriction portion, 6d22: second constriction portion, 6d23: third constriction portion, 6d3: collision wall, 6d31: first collision wall, 6d32: second collision wall, 6d4: outflow portion, 6d51: first volume portion, 6d52: second volume portion, 6d53: third volume portion, 6d54: fourth volume portion, 6d6: partition wall, 6d7: air supply portion, 6d8: air passage, 6d9: one end, 6d10: the other end, 6d11: annular passage, 6d12: first passage, 6d13: second passage, 6d14: cylindrical portion, 6d15: mixing space, 6d16: necked portion, 6d17: first inclined portion, 6d18: second inclined portion, 6d19: third inclined portion, 6e: discharge port, 6f: filter, 6g: connection portion, 6h: engagement portion, 6i: first member, 6j: second member, 6k: first casing, 6l: second casing, 6l1: casing body, 6l2: lid, 6l3: side wall, 6l4: side wall, 6m: branch pipe, 6n: bracket, 6o: bracket, 6p: metal fitting, 6q: fixing plate, 6q1: portion, 6q2: portion, 6r: piping, 6t: screw, 6u: piping, 7: rope, 8: foamed glass, 9: net bag, 10: water purification system, 11: anchor, 12: locking member, A: blue-green algae, G: bottom, R: water area, W: water to be treated

## Claims

1. A water purification system comprising:
a floating island floated on a water area; and
a blue-green algae crusher connected to the floating island,
wherein the blue-green algae crusher is configured to be capable of applying an external force to blue-green algae in water to be treated within the water area and crushing the blue-green algae.

2. The water purification system according to Claim 1,
wherein the blue-green algae crusher is configured to operate by electric power generated by a solar panel placed on the floating island.

3. The water purification system according to Claim 1,
further comprising foamed glass arranged to be capable of contacting water in the water area.

4. The water purification system of according to any one of Claims 1 to 3,
wherein the external force includes a shear force applied to the blue-green algae when the water to be treated passes through a constriction portion.

5. The water purification system according to Claim 4,
wherein the external force further includes an impact force applied to the blue-green algae when the water to be treated accelerated while passing through the constriction portion collides with a collision wall, and an impact force applied to the blue-green algae by cavitation generated when the water to be treated passes through the constriction portion.

6. The water purification system according to Claim 1,
wherein the blue-green algae crusher is suspended from the floating island.

7. The water purification system according to Claim 1,
wherein the blue-green algae crusher is arranged at a peripheral edge of the floating island.

8. The water purification system according to Claim 3,
wherein the foamed glass is submerged in the water area in a state of being housed in a net bag.
